(19) Europäisches Patentamt
European Patent Office
Office européen des brevets

(11) **EP 4 464 405 A1**

(12) **EUROPEAN PATENT APPLICATION**
published in accordance with Art. 153(4) EPC

(43) Date of publication:
**20.11.2024 Bulletin 2024/47**

(21) Application number: **23740318.3**

(22) Date of filing: **12.01.2023**

(51) International Patent Classification (IPC):
**B01D 63/10** (2006.01)   **B01D 53/22** (2006.01)
**B01D 63/00** (2006.01)

(52) Cooperative Patent Classification (CPC):
**B01D 53/22; B01D 63/00; B01D 63/10**

(86) International application number:
**PCT/JP2023/000686**

(87) International publication number:
**WO 2023/136310 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022 JP 2022004487
26.08.2022 JP 2022135405**

(71) Applicant: **NITTO DENKO CORPORATION
Ibaraki-shi
Osaka 567-8680 (JP)**

(72) Inventors:
• **MIYAMOTO, Atsuko
Ibaraki-shi, Osaka 567-8680 (JP)**
• **HATAHOKO, Ibuki
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **SPIRAL MEMBRANE ELEMENT**

(57)     The present invention provides a spiral membrane element suitable for suppressing an increase in a pressure loss of a permeated fluid during operation, especially when a feed fluid is supplied at a high pressure. A spiral membrane element 10 of the present invention includes a central tube 21 and a membrane leaf 11. In the membrane leaf 11, a surface A1 of a first permeation spacer 14 has grooves a and projections c. A surface B1 of a second permeation spacer 15 has grooves b and projections d. In the spiral membrane element 10, at least one condition selected from the group consisting of condition (a) and condition (b) is satisfied. (a) While a position of the second permeation spacer 15 relative to the first permeation spacer 14 moves in a second direction Y by a larger pitch out of a pitch L2 and a pitch R2, a top portion of at least one of the projections c is in contact with a top portion of at least one of the projections d. (b) A compressive elasticity modulus of the first permeation spacer 14 is different from a compressive elasticity modulus of the second permeation spacer 15.

FIG.1

**Description**

TECHNICAL FIELD

The present invention relates to a spiral membrane element.

BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

A spiral membrane element is used for the membrane separation method, for example. The spiral membrane element includes a central tube and a membrane leaf that is wound around the central tube. The membrane leaf has a separation membrane and a permeation spacer. The spiral membrane element is suitable for allowing the separation membrane to have an increased membrane area in the membrane element.

The permeation spacer included in the membrane leaf has, for example, grooves on a surface thereof (as in Patent Literature 1, for example). The grooves can function as a flow passage for a permeated fluid having permeated through the separation membrane. In a configuration disclosed in Patent Literature 1, a permeation spacer has a surface that has grooves and that is in contact with a separation membrane.

CITATION LIST

Patent Literature

Patent Literature 1: JP 2015-24372 A

SUMMARY OF INVENTION

Technical Problem

In a spiral membrane element in which a permeation spacer has a surface that has grooves and that is in contact with a separation membrane, the separation membrane tends to enter the grooves of the permeation spacer during operation of the spiral membrane element due to a pressure difference between a feed fluid and a permeated fluid. When the separation membrane enters the grooves of the permeation spacer, dimensions of the grooves are reduced and a pressure loss of the permeated fluid is increased. The pressure loss of the permeated fluid tends to be significantly increased in the case where the feed fluid has a high pressure, that is, in the case where the pressure difference between the feed fluid and the permeated fluid is large.

Therefore, the present invention is intended to provide a spiral membrane element suitable for suppressing an increase in a pressure loss of a permeated fluid during operation, especially when a feed fluid is supplied at a high pressure.

Solution to Problem

As a result of intensive studies, the present inventors have found that by arranging two permeation spacers in such a manner that their surfaces having grooves face each other in a membrane leaf, it is possible to avoid the situation in which the surfaces having grooves are in contact with the separation membrane. The present inventors made further studies on the basis of this finding and have completed the present invention by identifying a combination of permeation spacers suitable for suppressing an increase in the pressure loss.

The present invention provides a spiral membrane element including:

a central tube; and
a membrane leaf that has a separation membrane and is wound around the central tube, wherein
the membrane leaf has
a first permeation spacer having a surface A1 and a second permeation spacer having a surface B1 facing the surface A1,
the surface A1 has a plurality of grooves a and a plurality of projections c,
the surface B1 has a plurality of grooves b and a plurality of projections d,

on the surface A1, the grooves a and the projections c each extend in a first direction and are arranged in a second direction perpendicular to the first direction,

on the surface B1, the grooves b and the projections d each extend in the first direction and are arranged in the second direction, and

at least one condition selected from the group consisting of condition (a) and condition (b) below is satisfied:

(a) While a position of the second permeation spacer relative to the first permeation spacer moves in the second direction by a larger pitch out of a pitch of the grooves a and a pitch of the grooves b, a top portion of at least one of the projections c is in contact with a top portion of at least one of the projections d;

(b) A compressive elasticity modulus of the first permeation spacer is different from a compressive elasticity modulus of the second permeation spacer.

Advantageous Effects of Invention

The present invention can provide a spiral membrane element suitable for suppressing an increase in the pressure loss of a permeated fluid during operation, especially when a feed fluid is supplied at a high pressure.

BRIEF DESCRIPTION OF DRAWINGS

FIG. 1 is a developed perspective view illustrating schematically a spiral membrane element according to one embodiment of the present invention.
FIG. 2 is a schematic cross-sectional view of the spiral membrane element.
FIG. 3A is a schematic plan view of a first permeation spacer included in the spiral membrane element.
FIG. 3B is a schematic cross-sectional view of the first permeation spacer shown in FIG. 3A.
FIG. 4A is a schematic plan view of a second permeation spacer included in the spiral membrane element.
FIG. 4B is a schematic cross-sectional view of the second permeation spacer shown in FIG. 4A.
FIG. 5 is a schematic cross-sectional view illustrating a separation membrane included in the spiral membrane element.
FIG. 6 is a diagram for explaining a method for producing the spiral membrane element.
FIG. 7 is a diagram for explaining a method for producing the spiral membrane element.
FIG. 8A is a diagram for explaining states of the first permeation spacer and the second permeation spacer during operation of the spiral membrane element.
FIG. 8B is a diagram for explaining states of the first permeation spacer and the second permeation spacer during operation of the spiral membrane element.
FIG. 9 is a schematic cross-sectional view illustrating an example of a measuring device for measuring a pressure loss of a laminate of the first permeation spacer and the second permeation spacer.
FIG. 10A is a microscope image of a surface of #3000E that is a permeation spacer.
FIG. 10B is a microscope image of a cross section of #3000E.
FIG. 11 is a microscope image of a cross section of a 46-wale material that is a permeation spacer.
FIG. 12A is a microscope image of a surface of a 34-wale material that is a permeation spacer.
FIG. 12B is a microscope image of a cross section of the 34-wale material.
FIG. 13A is a diagram for explaining states of two permeation spacers in a spiral membrane element that does not satisfy condition (a) during operation of the spiral membrane element.
FIG. 13B is a diagram for explaining states of the two permeation spacers in the spiral membrane element that does not satisfy condition (a) during operation of the spiral membrane element.

DESCRIPTION OF EMBODIMENTS

A spiral membrane element according to a first aspect of the present invention includes:

a central tube; and
a membrane leaf that has a separation membrane and is wound around the central tube, wherein
the membrane leaf has
a first permeation spacer having a surface A1 and a second permeation spacer having a surface B1 facing the surface A1,
the surface A1 has a plurality of grooves a and a plurality of projections c,

the surface B1 has a plurality of grooves b and a plurality of projections d,

on the surface A1, the grooves a and the projections c each extend in a first direction and are arranged in a second direction perpendicular to the first direction,

on the surface B1, the grooves b and the projections d each extend in the first direction and are arranged in the second direction, and

at least one condition selected from the group consisting of condition (a) and condition (b) below is satisfied:

(a) While a position of the second permeation spacer relative to the first permeation spacer moves in the second direction by a larger pitch out of a pitch of the grooves a and a pitch of the grooves b, a top portion of at least one of the projections c is in contact with a top portion of at least one of the projections d;

(b) A compressive elasticity modulus of the first permeation spacer is different from a compressive elasticity modulus of the second permeation spacer.

According to a second aspect of the present invention, for example, in the spiral membrane element according to the first aspect, a shape of the surface A1 is different from a shape of the surface B1.

According to a third aspect of the present invention, for example, in the spiral membrane element according to the first or second aspect, at least one condition selected from the group consisting of condition (i), condition (ii), and condition (iii) is satisfied:

(i) The number of the grooves a per 25.4 mm in the second direction is different from the number of the grooves b per 25.4 mm in the second direction;

(ii) The pitch of the grooves a in the second direction is different from the pitch of the grooves b in the second direction;

(iii) The grooves a each have a width that is different from a width that the grooves b each have.

According to a fourth aspect of the present invention, for example, in the spiral membrane element according to any one of the first to third aspects, a ratio of the number of the grooves b per 25.4 mm in the second direction with respect to the number of the grooves a per 25.4 mm in the second direction is 0.3 to 2.5.

According to a fifth aspect of the present invention, for example, in the spiral membrane element according to any one of the first to fourth aspects, a ratio of the pitch ($\mu$m) of the grooves b in the second direction with respect to the pitch ($\mu$m) of the grooves a in the second direction is 0.3 to 2.5.

According to a sixth aspect of the present invention, for example, in the spiral membrane element according to any one of the first to fifth aspects, a ratio of a width ($\mu$m) that the grooves b each have with respect to a width ($\mu$m) that the grooves a each have is 0.2 to 5.0.

According to a seventh aspect of the present invention, for example, in the spiral membrane element according to any one of the first to sixth aspects, a ratio of a width ($\mu$m) that the grooves a each have with respect to a total value of the width ($\mu$m) that the grooves a each have and the pitch ($\mu$m) of the grooves a in the second direction is 0.15 to 0.55.

According to an eighth aspect of the present invention, for example, in the spiral membrane element according to any one of the first to seventh aspects, the first permeation spacer has a surface A2 facing the surface A1, the second permeation spacer has a surface B2 facing the surface B1, and each of the surface A2 and the surface B2 is flat.

According to a ninth aspect of the present invention, for example, in the spiral membrane element according to any one of the first to eighth aspects, the first permeation spacer has a surface A2 facing the surface A1, the second permeation spacer has a surface B2 facing the surface B1, and each of the surface A2 and the surface B2 has no grooves.

According to a tenth aspect of the present invention, for example, in the spiral membrane element according to any one of the first to ninth aspects, a pressure loss measured by a test below is less than 0.035 MPa.

Test: A rectangular laminate that is 170 mm in length and 35 mm in width is produced by laminating the first permeation spacer on the second permeation spacer in such a manner that the surface A1 faces the surface B1. A specimen is produced by further laminating a polyethylene terephthalate film on the laminate. A nitrogen gas is delivered to the laminate at a flow rate of 2 L/min in a 20°C environment while a space adjacent to the film of the specimen is pressurized to 10 MPa. A pressure loss caused by that the nitrogen gas moves in the laminate in a longitudinal direction of the laminate is measured.

According to an eleventh aspect of the present invention, for example, in the spiral membrane element according to any one of the first to tenth aspects, the membrane leaf has two pieces of the separation membranes, and the two pieces of the separation membranes are stacked with each other and sealed in such a manner as to have a bag-like structure.

According to a twelfth aspect of the present invention, for example, in the spiral membrane element according to the eleventh aspect, the first permeation spacer and the second permeation spacer are disposed between the two pieces of the separation membranes.

According to a thirteenth aspect of the present invention, for example, the spiral membrane element according to any one of the first to twelfth aspects is used for separating carbon dioxide from a gas mixture containing carbon dioxide and nitrogen.

The present invention will be described in detail below. The following description is not intended to limit the present invention to a specific embodiment.

<Embodiment of spiral membrane element>

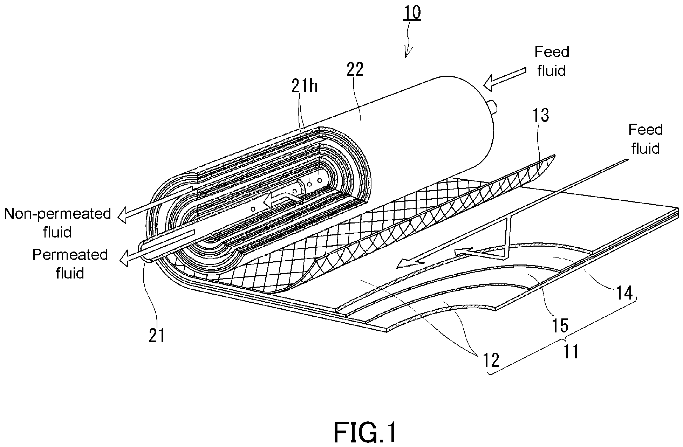

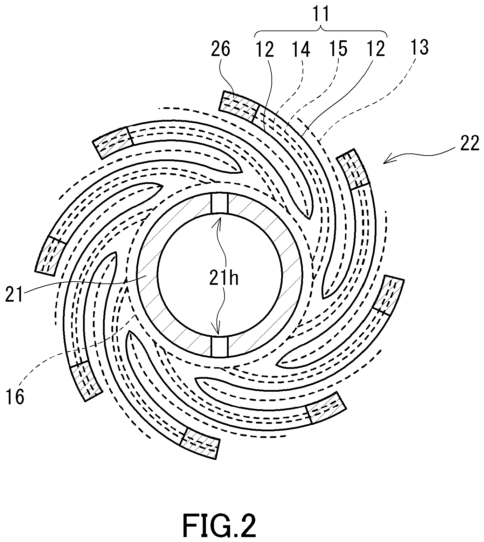

FIGs. 1 and 2 illustrate a spiral membrane element 10 (hereinafter referred to as a "separation membrane element 10") according to the present embodiment. The separation membrane element 10 includes a central tube 21 and a laminate 22. The laminate 22 is wound around the central tube 21 and disposed around the central tube 21. In an inside of the laminate 22, a feed fluid flow passage and a permeated fluid flow passage are formed.

A feed fluid is supplied from one end face of the laminate 22 to an inside of the separation membrane element 10 and flows, in parallel with a longitudinal direction of the central tube 21, through the feed fluid flow passage. In the separation membrane element 10, the feed fluid is divided to generate a permeated fluid and a non-permeated fluid. The permeated fluid is guided to an outside via the central tube 21. The non-permeated fluid is discharged to an outside of the separation membrane element 10 from another end face of the laminate 22.

The feed fluid to be processed by the separation membrane element 10 may be a gas or a liquid. In one example, the feed fluid is a gas mixture containing an acid gas, particularly a gas mixture containing carbon dioxide and nitrogen.

As shown in FIGs. 1 and 2, the laminate 22 has a plurality of membrane leaves 11. Each of the membrane leaves 11 has a separation membrane 12, a first permeation spacer 14, and a second permeation spacer 15. In FIG. 2, the first permeation spacer 14 and the second permeation spacer 15 are indicated by dashed lines. Specifically, each of the membrane leaves 11 has two pieces of the separation membranes 12. The two pieces of the separation membranes 12 are stacked with each other and sealed on three sides in such a manner as to have a bag-like structure. For the sealing of the two pieces of the separation membranes 12, an adhesive layer 26 including an adhesive is used, for example. The first permeation spacer 14 and the second permeation spacer 15 are disposed between the two pieces of the separation membranes 12 in such a manner as to be positioned inside the bag-like structure. In each of the membrane leaves 11, the first permeation spacer 14 and the second permeation spacer 15 are laminated. The first permeation spacer 14 and the second permeation spacer 15 secure, between the two pieces of the separation membranes 12, a space serving as the permeated fluid flow passage. The number of the membrane leaves 11 in the laminate 22 is, for example, but not particularly limited to, 2 to 30.

The laminate 22 further has a feed spacer 13. The feed spacer 13 is positioned outside the above-mentioned bag-like structure and is laminated on the membrane leaf 11. Specifically, the laminate 22 has a plurality of the feed spacers 13, and the plurality of the feed spacers 13 and the plurality of the membrane leaves 11 are laminated alternately in the laminate 22. The feed spacer 13 secures, between the membrane leaf 11 and the membrane leaf 11, a space serving as the feed fluid flow passage.

As shown in FIG. 2, the central tube 21 typically has a cylindrical shape, particularly a circular cylindrical shape. The central tube 21 serves the role of collecting the permeated fluid having permeated through each of the separation membranes 12 and guiding it to the outside of the separation membrane element 10. The central tube 21 is provided with an opening 21h that allows an inner space of the central tube 21 to communicate with an outer space of the central tube 21. The opening 21h is, for example, a through hole formed in a wall surface of the central tube 21. Specifically, the central tube 21 is provided with a plurality of the openings 21h at predetermined intervals along a direction in which the central tube 21 extends. The number of rows of the openings 21h provided along the direction in which the central tube 21 extends is, for example, but not particularly limited to, 1 and 2. The central tube 21 may be provided with two rows of the openings 21h in such a manner that the rows face each other. An outer diameter of the central tube 21 is, for example, 10 to 100 mm, and preferably 12 to 50 mm.

The separation membrane element 10 may further includes a flow passage spacer 16. The flow passage spacer 16 is positioned between the central tube 21 and the laminate 22 and is wound around the central tube 21 on a side closer to the central tube 21 than the laminate 22 is. The flow passage spacer 16 secures, between the laminate 22 and the central tube 21, a space serving as the permeated fluid flow passage. The flow passage spacer 16 is connected to an opening end of the membrane leaf 11 mentioned above. Thereby, each of the first permeation spacer 14 and the second permeation spacer 15 of the membrane leaf 11 is connected to the flow passage spacer 16. The flow passage spacer 16 is in contact with the opening 21h of the central tube 21. Thereby, the permeated fluid can flow from the flow passage spacer 16 to an inside of the central tube 21 through the opening 21h.

The separation membrane element 10 may further include a shell that surrounds the laminate 22. The shell may be made of FRP (fiber reinforced plastic). In order to protect the end faces of the laminate 22 and prevent the laminate 22 from extending telescopically, an end face member may be disposed on each of both sides of the laminate 22.

[First permeation spacer]

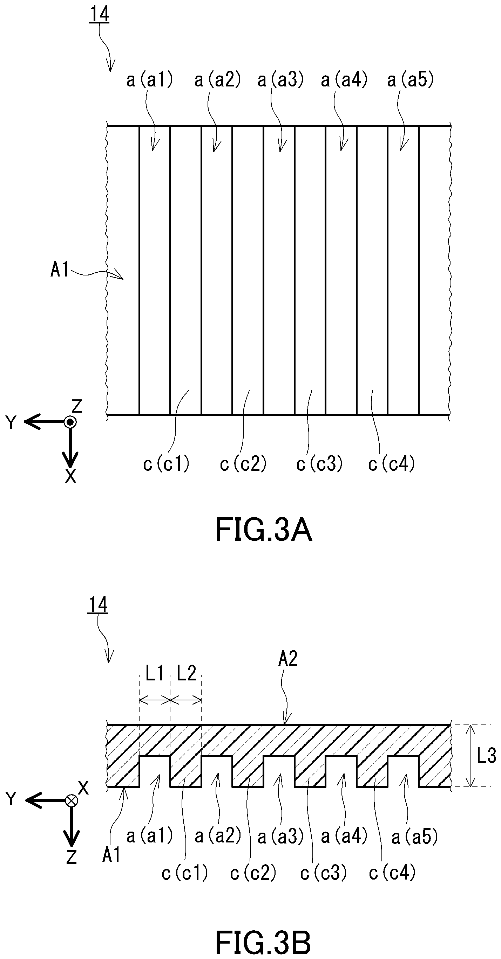

FIG. 3A is a schematic plan view of the first permeation spacer 14 when viewed from the second permeation spacer 15. FIG. 3B is a schematic cross-sectional view of the first permeation spacer 14 shown in FIG. 3A. As can be seen from FIGs. 3A and 3B, the first permeation spacer 14 has the shape of a sheet and has a pair of surfaces A1 and A2 facing each other. The surfaces A1 and A2 are each a principal surface (a surface having a largest area) of the first permeation spacer 14. In the membrane leaf 11, the surface A1 of the first permeation spacer 14 is in direct contact with the second permeation spacer 15, and the surface A2 is in direct contact with the separation membrane 12, specifically with a porous support member included in the separation membrane 12.

In the first permeation spacer 14, the surface A1 has a groove a. The groove a can function as a flow passage for the permeated fluid. The groove a extends in a first direction X, for example. The groove a may or may not extend straight in the first direction X. The groove a may extend in the first direction X while winding slightly. The first direction X is, for example, a direction from one of a pair of end faces of the first permeation spacer 14 toward the other, and typically coincides with a direction (a circumferential direction of the central tube 21) in which the membrane leaf 11 is wound around the central tube 21. The groove a has, for example, a substantially rectangular shape when viewed in plane (FIG. 3A), and a cross section of the groove a also has a substantially rectangular shape (FIG. 3B). However, the shape of the groove a is not limited to the above-mentioned shape, and the cross section of the groove a may be V-shaped or U-shaped. Note that in the present description, the phrase "substantially rectangular shape" means that when a groove is viewed in plane or when a cross section of the groove is viewed, a ratio of an area of the groove with respect to an area of a smallest right-angle quadrilateral surrounding the groove is 70% or more, and preferably 90% or more.

In the first permeation spacer 14, the surface A1 typically has a plurality of the grooves a. The grooves a may be different from each other in terms of shape and dimensions, but the grooves a are preferably identical to each other in terms of these. In one example, the grooves a each extend in the first direction X and are arranged in a second direction Y perpendicular to the first direction X, and preferably arranged at substantially equal intervals in the second direction Y The second direction Y is, for example, a direction from one of another pair of end faces of the first permeation spacer 14 toward the other, and typically coincides with the longitudinal direction of the central tube 21. Note that a third direction Z perpendicular to each of the first direction X and the second direction Y is, for example, a direction from the first permeation spacer 14 toward the second permeation spacer 15, and typically coincides with a radial direction of the central tube 21.

The surface A1 further has a projection c located between two grooves a. Typically, the projection c is a ridge formed between two grooves a. The projection c extends in the direction (the first direction X) in which the grooves a extend. As is the case with the grooves a, the projection c may or may not extend straight in the first direction X. The projection c may extend in the first direction X while winding slightly. As is the case with the grooves a, the projection c has, for example, a substantially rectangular shape when viewed in plane, and a cross section of the projection c also has a substantially rectangular shape.

The surface A1 typically has a plurality of the projections c. The projections c may be different from each other in terms of shape and dimensions, but the projections c are preferably identical to each other in terms of these. In one example, the projections c each extend in the first direction X and are arranged in the second direction Y, and preferably arranged at substantially equal intervals in the second direction Y The grooves a and the projections c are arranged alternately in the second direction Y, that is, the first permeation spacer 14 has a rugged surface that is, as the surface A1, composed of the grooves a and the projections c.

FIGs. 3A and 3B illustrate a plurality of grooves a1, a2, a3, a4, and a5 as well as a plurality of projections c1, c2, c3, and c4 formed on the surface A1 of the first permeation spacer 14. The grooves a1 to a5 and the projections c1 to c4 are arranged alternately in the second direction Y. In FIGs. 3A and 3B, the grooves a1 to a5 are arranged at equal intervals in the second direction Y The projections c1 to c4 are also arranged at equal intervals in the second direction Y

A width L1 that the grooves a each have is, for example, but not particularly limited to, 50 μm or more, and may be 100 μm or more, 200 μm or more, or 300 μm or more. The upper limit of the width L1 that the grooves a each have is, for example, but not particularly limited to, 600 μm, and may be 400 μm, and may be 300 μm in some cases. "The width L1 that the grooves a each have" can be determined by the following method. First, the first permeation spacer 14 is left at rest on a flat surface, and a cross section of the first permeation spacer 14 taken along the second direction Y is observed with a microscope. The magnification here is adjusted so that the number of the grooves a included in the obtained microscope image is approximately five. In one example, the magnification is approximately 100. Next, a minimum value of a width of each of the grooves a included in the microscope image (a minimum value of the distance, in the second direction Y, between two adjacent projections c) is calculated by image processing. The average value of the calculated values obtained can be referred to as the width L1 that the grooves a each have.

A pitch L2 of the grooves a in the second direction Y is, for example, but not particularly limited to, 100 μm or more, and may be 200 μm or more, 300 μm or more, or 400 μm or more. The upper limit of the pitch L2 of the grooves a is, for example, but not particularly limited to, 1000 μm, and may be 600 μm, and may be 400 μm in some cases. "The pitch L2 of the grooves a" can be determined by the following method. First, the first permeation spacer 14 is left at rest on a flat surface, and a cross section of the first permeation spacer 14 taken along the second direction Y is observed with a microscope. The magnification here is adjusted so that the number of the grooves a included in the obtained microscope image is approximately five. In one example, the magnification is approximately 100. Next, as for all the grooves a included in the microscope image, a maximum value of the distance, in second direction Y, between two adjacent grooves a (a maximum value of a width that the projections c each have) is calculated by image processing. The average value of the calculated values obtained can be referred to as the pitch L2 of the grooves a. Note that in the present description, the pitch L2 of the grooves a is referred to, in some cases, as the width that the projections c each have. The pitch L2 of the grooves a may or may not be the same as the width L1 that the grooves a each have.

A total value T1 of the width L1 ($\mu$m) that the grooves a each have and the pitch L2 ($\mu$m) of the grooves a in the second direction Y is, for example, but not particularly limited to, 200 $\mu$m to 1200 $\mu$m, and preferably 400 $\mu$m to 800 $\mu$m. A ratio of the width L1 ($\mu$m) that the grooves a each have with respect to the total value T1 ($\mu$m) is, for example, 0.1 or more, and may be 0.15 or more or 0.2 or more. The upper limit of this ratio is, for example, but not particularly limited to, 0.7, and may be 0.55, 0.5, or 0.4. The first permeation spacer 14 in which the ratio of the width L1 ($\mu$m) that the grooves a each have with respect to the total value T1 ($\mu$m) is 0.15 to 0.55 is suitable for suppressing an increase in the pressure loss of the permeated fluid during operation of the separation membrane element 10.

The number of the grooves a per 25.4 mm in the second direction Y is, for example, but not particularly limited to, 10 to 100, and preferably 30 to 70. The larger the number of the grooves a is, the larger the number of the projections c is and the more it is possible to suppress the entry of the later-described projections d of the second permeation spacer 15 into the grooves a. In contrast, the smaller the number of the grooves a is, the larger the width L1 that the grooves a each have can be adjusted to be, so that the pressure loss of the permeated fluid tends to be able to be reduced.

The surface A2 of the first permeation spacer 14 has no grooves and is flat, for example. The surface A2 may be smooth. For example, the smooth surface A2 has an arithmetic mean roughness Ra of 100 $\mu$m or less, preferably 80 $\mu$m or less, and more preferably 60 $\mu$m or less, the arithmetic mean roughness Ra being specified in Japanese industrial specification (JIS) B0601:2001.

The first permeation spacer 14 usually has an opening (a gap) for delivering the permeated fluid from the surface A2 to the surface A1. An opening ratio of the first permeation spacer 14 is, for example, but not particularly limited to, 10% to 80%. The opening ratio of the first permeation spacer 14 can be determined by the following method. First, the first permeation spacer 14 is put on a film, and a surface (the surface A2, for example) of the first permeation spacer 14 is observed with a scanning electron microscope (SEM). From the obtained electron microscope image, an area E1 of the surface of the first permeation spacer 14 and an area E2 (an area of a gap formed in the first permeation spacer 14) in which the film can be seen through the first permeation spacer 14 are calculated by image processing. A ratio of the area E2 with respect to the area E1 can be determined as the opening ratio of the first permeation spacer 14.

A thickness L3 of the first permeation spacer 14 is, for example, but not particularly limited to, 100 $\mu$m to 2000 $\mu$m, and preferably 200 $\mu$m to 500 $\mu$m. The thickness L3 of the first permeation spacer 14 corresponds to, for example, a distance from the surface A2 to a top portion that the projections c on the surface A1 each have.

A compressive elasticity modulus of the first permeation spacer 14 is, for example, $1.5 \times 10^{-5}$ MPa or more, and may be $2.0 \times 10^{-5}$ MPa or more, $2.5 \times 10^{-5}$ MPa or more, $3.0 \times 10^{-5}$ MPa or more, or even $3.5 \times 10^{-5}$ MPa or more. The upper limit of the compressive elasticity modulus of the first permeation spacer 14 is, for example, but not particularly limited to, $1.0 \times 10^{-4}$ MPa.

The compressive elasticity modulus of the first permeation spacer 14 can be measured by the following method. First, the first permeation spacer 14 is cut into a piece that is 3 mm in length and 3 mm in width to obtain a specimen. The specimen is placed in a compression tester in such a manner that the surface A2 of the specimen faces up. Next, under a constant temperature condition of 55°C, an indenter is brought into contact with the surface A2 to apply a load at a compression speed of 1%/min in a thickness direction of the specimen. From the relationship between the load applied to the specimen and a compressive strain of the specimen, a compressive elasticity modulus E (MPa) can be calculated by the following formula.

$$E \ (\text{MPa}) = (\sigma2 - \sigma1)/(\varepsilon2 - \varepsilon1)$$

In the above-mentioned formula, $\sigma1$ is the load (mN) applied to the specimen when the compressive strain is 0.05%, $\varepsilon1$ is a compressive strain of 0.05%, and $\sigma2$ is a load of 1.0 mN, and $\varepsilon2$ is the compressive strain (%) of the specimen when the load (mN) applied to the specimen is 1.0 mN.

Examples of the first permeation spacer 14 include a tricot knit, especially a single tricot knit. Examples of a material of the first permeation spacer 14 include: a resin material such as polypropylene (PP), polyethylene (PE), polyethylene terephthalate (PET), polyamide, polyphenylene sulfide (PPS), an ethylene-chlorotrifluoroethylene copolymer (ECTFE), an epoxy resin, or a urethane resin; a natural polymer; a rubber; and a metal. The first permeation spacer 14 may be a single tricot knit composed of PET, or a material obtained by impregnating the single tricot knit with an epoxy resin.

Specific examples of the first permeation spacer 14 include #3000E and #1000 available from KB SEIREN LTD., a 46-wale material available from Guilford, and a 34-wale material available from HORNWOOD INC.

[Second permeation spacer]

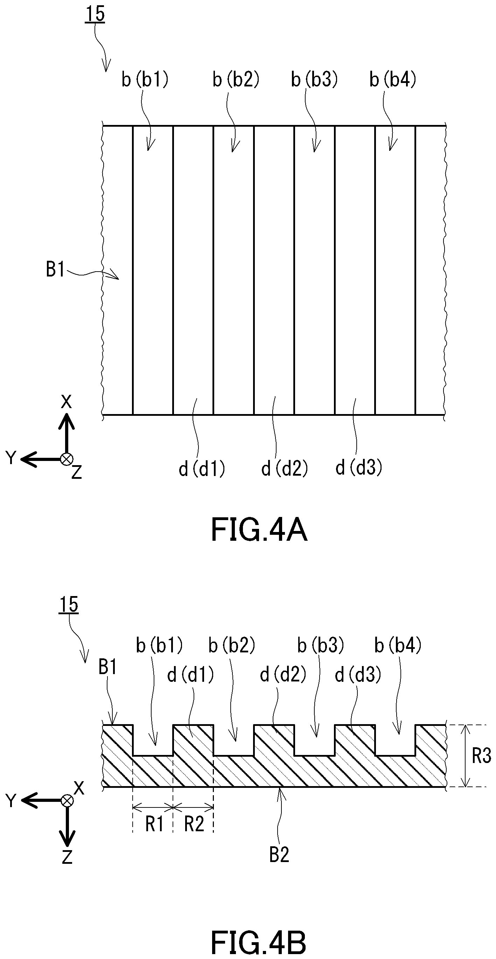

FIG. 4A is a schematic plan view of the second permeation spacer 15 when viewed from the first permeation spacer 14. FIG. 4B is a schematic cross-sectional view of the second permeation spacer 15 shown in FIG. 4A. As can be seen from FIGs. 4A and 4B, the second permeation spacer 15 has the shape of a sheet and has a pair of surfaces B1 and B2 facing each other. The surfaces B1 and B2 are each a principal surface of the second permeation spacer 15. In the membrane leaf 11, the surface B1 of the second permeation spacer 15 faces the surface A1 of the first permeation spacer 14 and is in direct contact with the surface A1. The surface B2 of the second permeation spacer 15 is in direct contact with the separation membrane 12, specifically with the porous support member included in the separation membrane 12.

In the second permeation spacer 15, the surface B1 has a groove b. The groove b can function as a flow passage for the permeated fluid. The groove b extends in the above-mentioned first direction X, for example. The groove b may or may not extend straight in the first direction X. The groove b may extend in the first direction X while winding slightly. The groove b has, for example, a substantially rectangular shape when viewed in plane (FIG. 4A), and a cross section of the groove b also has a substantially rectangular shape (FIG. 4B). However, the shape of the groove b is not limited to the above-mentioned shape, and the cross section of the groove b may be V-shaped or U-shaped.

In the second permeation spacer 15, the surface B1 typically has a plurality of the grooves b. The grooves b may be different from each other in terms of shape and dimensions, but the grooves b are preferably identical to each other in terms of these. In one example, the grooves b each extend in the first direction X and are arranged in the above-mentioned second direction Y, and preferably arranged at substantially equal intervals in the second direction Y

The surface B1 further has a projection d located between two grooves b. Typically, the projection d is a ridge formed between two grooves b. The projection d extends in the direction in which the grooves b extend. As is the case with the grooves b, the projection d may or may not extend straight in the first direction X. The projection d may extend in the first direction X while winding slightly. As is the case with the grooves b, the projection d has, for example, a substantially rectangular shape when viewed in plane, and a cross section of the projection d also has a substantially rectangular shape.

The surface B1 typically has a plurality of the projections d. The projections d may be different from each other in terms of shape and dimensions, but the projections d are preferably identical to each other in terms of these. In one example, the projections d each extend in the first direction X and are arranged in the second direction Y, and preferably arranged at substantially equal intervals in the second direction Y The grooves b and the projections d are arranged alternately in the second direction Y. That is, the second permeation spacer 15 has a rugged surface that is, as the surface B1, composed of the grooves b and the projections d.

FIGs. 4A and 4B illustrate a plurality of grooves b1, b2, b3, and b4 as well as a plurality of projections d1, d2, and d3 formed on the surface B1 of the second permeation spacer 15. The grooves b1 to b4 and the projections d1 to d3 are arranged alternately in the second direction Y. In FIGs. 4A and 4B, the grooves b1 to b4 are arranged at equal intervals in the second direction Y The projections d1 to d3 are also arranged at equal intervals in the second direction Y

A width R1 that the grooves b each have is, for example, but not particularly limited to, 50 $\mu$m or more, and may be 100 $\mu$m or more, 200 $\mu$m or more, or 300 $\mu$m or more. The upper limit of the width R1 that the grooves b each have is, for example, but not particularly limited to, 600 $\mu$m, and may be 400 $\mu$m, and may be 300 $\mu$m in some cases. "The width R1 that the grooves b each have" can be determined by the method mentioned above for the width L1 that the grooves a each have.

A pitch R2 of the grooves b in the second direction Y is, for example, but not particularly limited to, 100 $\mu$m or more, and may be 200 $\mu$m or more, 300 $\mu$m or more, or 400 $\mu$m or more. The upper limit of the pitch R2 of the grooves b is, for example, but not particularly limited to, 1000 $\mu$m, and may be 600 $\mu$m, and may be 400 $\mu$m in some cases. "The pitch R2 of the grooves b" can determined by the method mentioned above for the pitch L2 of the grooves a. Note that in the present description, the pitch R2 of the grooves b is referred to, in some cases, as a width that the projections d each have. The pitch R2 of the grooves b may or may not be the same as the width R1 that the grooves b each have. The pitch L2 of the grooves a and the pitch R2 of the grooves b may satisfy a relationship $R2 \geq L2$.

A total value T2 of the width R1 ($\mu$m) that the grooves b each have and the pitch R2 ($\mu$m) of the grooves b in the second direction Y is, for example, but not particularly limited to, 200 $\mu$m to 1200 $\mu$m, and preferably 400 $\mu$m to 800 $\mu$m. A ratio of the width R1 ($\mu$m) that the grooves b each have with respect to the total value T2 ($\mu$m) is, for example, 0.1 or more, and may be 0.15 or more or 0.2 or more. The upper limit of this ratio is, for example, but not particularly limited to, 0.7, and may be 0.55, 0.5, or 0.4. The second permeation spacer 15 in which the ratio of the width R1 ($\mu$m) that the grooves b each have with respect to the total value T2 ($\mu$m) is 0.15 to 0.55 is suitable for suppressing an increase in the pressure loss of the permeated fluid during operation of the separation membrane element 10.

The number of the grooves b per 25.4 mm in the second direction Y is, for example, but not particularly limited to, 10 to 100, and preferably 30 to 70. The larger the number of the grooves b is, the larger the number of the projections d is and the more it is possible to suppress the entry of the projections c of the first permeation spacer 14 into the grooves b. In contrast, the smaller the number of the grooves b is, the larger the width R1 that the grooves b each have can be adjusted to be, so that the pressure loss of the permeated fluid tends to be able to be reduced.

The surface B2 of the second permeation spacer 15 has no grooves and is flat, for example. The surface B2 may be smooth. For example, the smooth surface B2 has an arithmetic mean roughness Ra of 100 $\mu$m or less, preferably 80 $\mu$m or less, and more preferably 60 $\mu$m or less, the arithmetic mean roughness Ra being specified in JIS B0601:2001.

The second permeation spacer 15 usually has an opening (a gap) for delivering the permeated fluid from the surface B2 to the surface B1. An opening ratio of the second permeation spacer 15 is, for example, but not particularly limited to, 10% to 80%. The opening ratio of the second permeation spacer 15 can be determined by the method mentioned above for the first permeation spacer 14.

A thickness R3 of the second permeation spacer 15 is, for example, but not particularly limited to, 100 $\mu$m to 2000 $\mu$m, and preferably 200 $\mu$m to 500 $\mu$m. The thickness R3 of the second permeation spacer 15 corresponds to, for example, a distance from the surface B2 to a top portion that the projections d on the surface B1 each have.

A compressive elasticity modulus of the second permeation spacer 15 is, for example, $1.5 \times 10^{-5}$ MPa or more, and may be $2.0 \times 10^{-5}$ MPa or more, $2.5 \times 10^{-5}$ MPa or more, $3.0 \times 10^{-5}$ MPa or more, or even $3.5 \times 10^{-5}$ MPa or more. The upper limit of the compressive elasticity modulus of the second permeation spacer 15 is, for example, but not particularly limited to, $1.0 \times 10^{-4}$ MPa. The compressive elasticity modulus of the second permeation spacer 15 can be measured by the method mentioned above for the first permeation spacer 14.

Examples of the second permeation spacer 15 include a tricot knit, especially a single tricot knit. Examples of a material of the second permeation spacer 15 include: a resin material such as polypropylene (PP), polyethylene (PE), polyethylene terephthalate (PET), polyamide, polyphenylene sulfide (PPS), an ethylene-chlorotrifluoroethylene copolymer (ECTFE), an epoxy resin, or a urethane resin; a natural polymer; a rubber; and a metal. The second permeation spacer 15 may be a single tricot knit composed of PET, or a material obtained by impregnating the single tricot knit with an epoxy resin. Specific examples of the second permeation spacer 15 include #3000E and #1000 available from KB SEIREN LTD., a 46-wale material available from Guilford, and a 34-wale material available from HORNWOOD INC.

In the present embodiment, the first permeation spacer 14 and the second permeation spacer 15 satisfy at least one condition selected from the group consisting of condition (a) and condition (b) below.

(a) While a position of the second permeation spacer 15 relative to the first permeation spacer 14 moves in the second direction Y by a larger pitch out of the pitch L2 of the grooves a and the pitch R2 of the grooves b, a top portion of at least one of the projections c is in contact with a top portion of at least one of the projections d.

(b) The compressive elasticity modulus of the first permeation spacer 14 is different from the compressive elasticity modulus of the second permeation spacer 15.

Examples of an aspect in which the condition (a) is satisfied include: an aspect (condition (c)) in which a shape of the surface A1 is different from a shape of the surface B1; an aspect in which the grooves a or the grooves b are not arranged at substantially equal intervals in the second direction Y; an aspect in which the pitch L2 of the grooves a of the first permeation spacer 14 is larger than the width R1 that the grooves b of the second permeation spacer 15 each have; and an aspect in which the pitch R2 of the grooves b of the second permeation spacer 15 is larger than the width L1 that the grooves a of the first permeation spacer 14 each have.

The present invention provides, in another aspect, the spiral membrane element 10 including:

the central tube 21; and
the membrane leaf 11 that has the separation membrane 12 and is wound around the central tube 21, wherein
the membrane leaf 11 has
the first permeation spacer 14 having the surface A1 and the second permeation spacer 15 having the surface B1 facing the surface A1,
the surface A1 has the grooves a and the surface B1 has the grooves b, and
at least one condition selected from the group consisting of condition (b) and condition (c) below is satisfied.

(b) The compressive elasticity modulus of the first permeation spacer 14 is different from the compressive elasticity modulus of the second permeation spacer 15.
(c) The shape of the surface A1 is different from the shape of the surface B1.

Furthermore, the first permeation spacer 14 and the second permeation spacer 15 preferably satisfy at least one condition selected from the group consisting of condition (i), condition (ii), and condition (iii) below, and more preferably satisfy all of the conditions (i) to (iii). The conditions (i) to (iii) correspond to specific examples of the above-mentioned condition (c).

(i) The number of the grooves a per 25.4 mm in the second direction Y is different from the number of the grooves b per 25.4 mm in the second direction Y.

(ii) The pitch L2 of the grooves a in the second direction Y is different from the pitch R2 of the grooves b in the second direction Y.

(iii) The grooves a each have the width L1 that is different from the width R1 that the grooves b each have.

A ratio P1 of the number of the grooves b per 25.4 mm in the second direction Y with respect to the number of the grooves a per 25.4 mm in the second direction Y is, for example, but not particularly limited to, 0.3 to 2.5, and may be 0.4 to 0.9 or 0.5 to 0.8. The ratio P1 may be 1.1 to 2.0 or 1.3 to 1.8 in some cases. The ratio P1 is preferably 0.3 to 0.9 or 1.1 to 2.5.

A ratio P2 of the pitch R2 ($\mu$m) of the grooves b in the second direction Y with respect to the pitch L2 ($\mu$m) of the grooves a in the second direction Y is, for example, but not particularly limited to, 0.3 to 2.5, and may be 0.4 to 0.9 or 0.5 to 0.8. The ratio P2 may be 1.1 to 2.0 or 1.3 to 1.8 in some cases. The ratio P2 is preferably 0.3 to 0.9 or 1.1 to 1.5.

A ratio P3 of the width R1 ($\mu$m) that the grooves b each have with respect to the width L1 ($\mu$m) that the grooves a each have is, for example, but not particularly limited to, 0.15 to 6.0, and may be 0.2 to 5.0, 0.3 to 0.9, 0.4 to 0.9, or 0.5 to 0.8. The ratio P3 may be 1.1 to 4.0 or 1.5 to 4.0 in some cases. The ratio P3 is preferably 0.3 to 0.9 or 1.1 to 4.0.

The above-mentioned condition (b) is satisfied, for example, when the material that the first permeation spacer 14 is composed of is different from the material that the second permeation spacer 15 is composed of. In some cases, the condition (b) is also satisfied depending on the presence of the impregnation of the first permeation spacer 14 and the second permeation spacer 15 with an epoxy resin. For example, the condition (b) is also satisfied in some cases when the first permeation spacer 14 is a single tricot knit composed of PET and the second permeation spacer 15 is a material obtained by impregnating the single tricot knit with an epoxy resin.

In the present embodiment, the first permeation spacer 14 and the second permeation spacer 15 may satisfy condition (d) and condition (e) below, etc. in addition to or instead of the condition (b).

(d) A restitution coefficient of the first permeation spacer 14 is different from a restitution coefficient of the second permeation spacer 15.

(e) A hardness of the first permeation spacer 14 is different from a hardness of the second permeation spacer 15.

[Feed spacer and flow passage spacer]

Each of the feed spacer 13 and the flow passage spacer 16 is not particularly limited and a known material can be used. Examples of each of the feed spacer 13 and the flow passage spacer 16 include a net, a mesh, a wire woven fabric, a fiber woven fabric, a nonwoven fabric, a grooved sheet, and a corrugated sheet. Examples of a material of each of these spacers 13 and 16 include: a resin material such as polypropylene (PP), polyethylene (PE), polyethylene terephthalate (PET), polyamide, polyphenylene sulfide (PPS), an ethylene-chlorotrifluoroethylene copolymer (ECTFE), an epoxy resin, or a urethane resin; a natural polymer; a rubber; and a metal.

A thickness of each of the spacers 13 and 16 is, for example, but not particularly limited to, 100 $\mu$m to 2000 $\mu$m. An opening ratio of each of the spacers 13 and 16 is, for example, but not particularly limited to, 10% to 80%. The opening ratio of each of the spacers 13 and 16 can be determined by the method mentioned above for the first permeation spacer 14. Note that the flow passage spacer 16 may be identical to the first permeation spacer 14.

[Separation membrane]

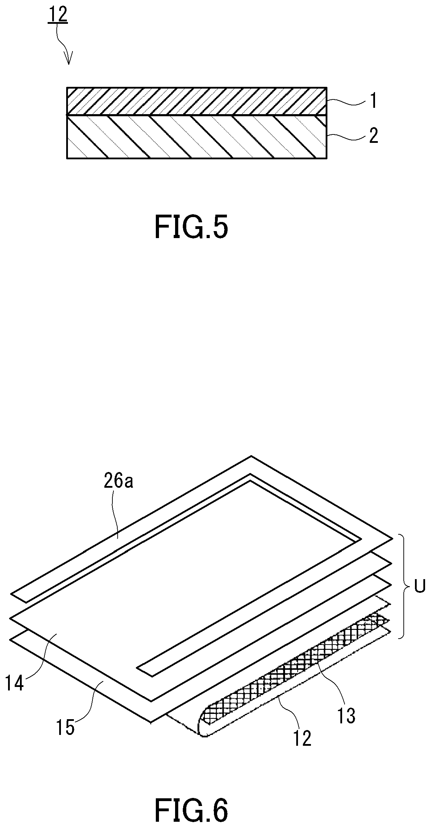

As shown in FIG. 5, the separation membrane 12 includes, for example, a separation functional layer 1 and a porous support member 2 supporting the separation functional layer 1. The separation functional layer 1 is in direct contact with the porous support member 2, for example.

(Separation functional layer)

The separation functional layer 1 is, for example, a layer capable of allowing an acid gas contained in a gas mixture to preferentially permeate therethrough. The separation functional layer 1 preferably includes a resin. Examples of the resin included in the separation functional layer 1 include a polyether block amide resin, a polyamide resin, a polyether resin, a polyimide resin, a polyetherimide resin, a cellulose acetate resin, a silicone resin, and a fluorine resin. The separation functional layer 1 preferably includes a polyimide resin or a cellulose acetate resin, and more preferably includes a cellulose acetate resin. The separation functional layer 1 is preferably composed substantially of a resin. In the present description, the phrase "composed substantially of" means exclusion of other component that alters essential characteristics of a material referred to, and for example means that 95 wt% or more or even 99 wt% or more is composed of the material.

A thickness of the separation functional layer 1 is, for example, 50 $\mu$m or less, preferably 25 $\mu$m or less, and more preferably 15 $\mu$m or less. The thickness of the separation functional layer 1 may be 0.05 $\mu$m or more, or 0.1 $\mu$m or more.

(Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 $\mu$m, for example. A thickness of the porous support member 2 is, for example, but not particularly limited to, 10 $\mu$m or more, preferably 20 $\mu$m or more, and more preferably 50 $\mu$m or more. The thickness of the porous support member 2 is, for example, 300 $\mu$m or less, preferably 200 $\mu$m or less, and more preferably 150 $\mu$m or less.

(Additional component)

The separation membrane 12 may further include an additional component other than the separation functional layer 1 and the porous support member 2. Examples of the additional component include a protective layer that protects the separation functional layer 1. In the case where the separation membrane 12 includes the protective layer, the separation functional layer 1 is positioned, for example, between the porous support 2 and the protective layer.

A material of the protective layer is, for example, but not particularly limited to, a silicone resin. The material of the protective layer may be the same as that of the separation functional layer 1. A thickness of the protective layer is, for example, but not particularly limited to, 5 $\mu$m or less, preferably 1 $\mu$m or less, and more preferably 0.5 $\mu$m or less.

[Method for producing spiral membrane element]

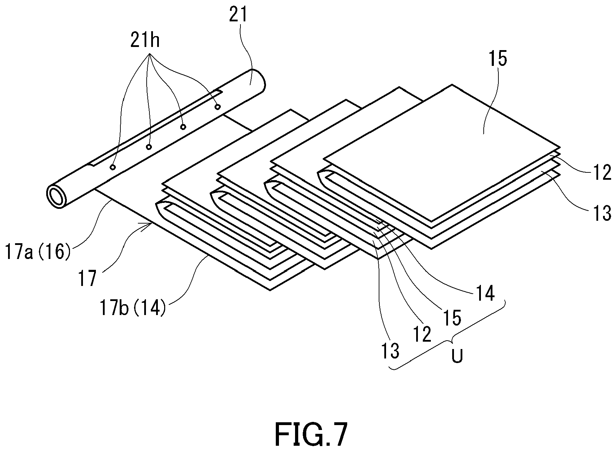

Next, an example of the method for producing the separation membrane element 10 will be described referring to FIGs. 6 and 7. First, as shown in FIG. 6, the separation membrane 12 is folded in half in such a manner that the separation functional layer 1 (or the protective layer) of the separation membrane 12 is positioned inside. The feed spacer 13 is disposed inside the separation membrane 12 folded in half, and the first permeation spacer 14 and the second permeation spacer 15 are disposed on the separation membrane 12. Here, the second permeation spacer 15 is disposed between the first permeation spacer 14 and the separation membrane 12. Next, an adhesive 26a is applied onto three sides of an outer circumferential portion of the first permeation spacer 14. Thus, a separation membrane unit U is obtained. The adhesive 26a is in an uncured state at this point.

Next, as shown in FIG. 7, the central tube 21, a spacer 17, and a plurality of the separation membrane units U are prepared. The spacer 17 has, for example, a first portion 17a that is directly wound around the central tube 21, and a second portion 17b that is laminated on the separation membrane unit U. The first portion 17a of the spacer 17 corresponds to the flow passage spacer 16, and the second portion 17b corresponds to the first permeation spacer 14. A material, a thickness, etc. of the first portion 17a may be the same as or different from those of the second portion 17b. The plurality of the separation membrane units U are placed on the second portion 17b of the spacer 17 and disposed stepwise. The number of the separation membrane units U is, for example, but not particularly limited to, 2 to 30. Note that the separation membrane unit U positioned uppermost does not have the first permeation spacer 14, for example.

Next, the first portion 17a of the spacer 17 is wound around the central tube 21. The number of windings of the first portion 17a is, for example, but not particularly limited to, 1 to 15, and preferably 2 to 10.

Next, the separation membrane units U are wound around the central tube 21. At this time, the separation membrane unit U positioned uppermost is laminated on the second portion 17b of the spacer 17. After the separation membrane units U are wound around the central tube 21, the adhesive 26a is cured to form the adhesive layer 26 while the bag-like membrane leaf 11 is formed. Thus, an assembly including the central tube 21 and the laminate 22 is obtained.

[Properties of spiral membrane element]

In the separation membrane element 10 of the present embodiment, the membrane leaf 11 has the first permeation spacer 14 and the second permeation spacer 15, and the surface A1 having the grooves a in the first permeation spacer 14 faces the surface B1 having the grooves b in the second permeation spacer 15. That is, in the membrane leaf 11, the surface A1 having the grooves a and the surface B1 having the grooves b are both out of contact with the separation membrane 12. Such a configuration makes it possible to suppress the entry of the separation membrane 12 into the grooves a of the first permeation spacer 14 or the grooves b of the second permeation spacer 15 during operation of the separation membrane element 10, and thereby an increase in the pressure loss of the permeated fluid can be suppressed. Furthermore, by suppressing the entry of the separation membrane 12 into the grooves a or b, it is also possible to suppress occurrence of a defect, such as a crack, in the separation membrane 12.

Furthermore, in the present embodiment, the first permeation spacer 14 and the second permeation spacer 15 satisfy at least one condition selected from the group consisting of the condition (a) and the condition (b) mentioned above. Such a configuration is suitable for suppressing an increase in the pressure loss of the permeated fluid during operation of the separation membrane element 10.

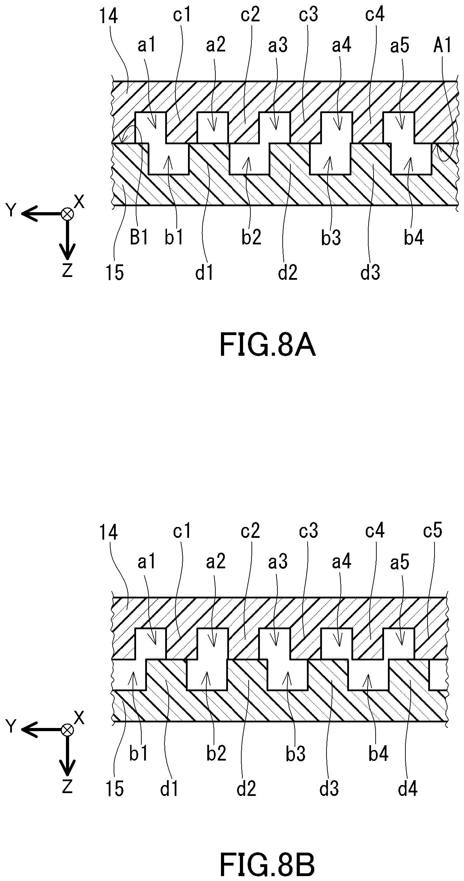

FIGs. 8A and 8B each illustrate an example in the case where the condition (a) is satisfied. Specifically, in FIGs. 8A and 8B, the shape of the surface A1 is different from the shape of the surface B1 as for the first permeation spacer 14 and the second permeation spacer 15. As shown in FIG. 8A, the top portion of at least one of the projections c in the first permeation spacer 14 can be in contact with the top portion of at least one of the projections d in the second permeation spacer 15. In FIG. 8A, top portions of the projections c1 and c2 are in contact with a top portion of the projection d1, a top portion of the projection c3 is in contact with a top portion of the projection d2, and a top portion of the projection c4 is in contact with a top portion of the projection d3. The contacts between the top portions of the projections c and the top portions of the projections d make it possible to suppress the entry of the projections c of the first permeation spacer 14 into the grooves b of the second permeation spacer 15 and the entry of the projections d of the second permeation spacer 15 into the grooves a of the first permeation spacer 14 during operation of the separation membrane element 10. This makes it possible to maintain sufficient dimensions of the grooves a and b that each function as a flow passage for the permeated fluid and to suppress an increase in the pressure loss of the permeated fluid.

During operation of the separation membrane element 10, especially when the feed fluid is supplied to the separation membrane element 10 at a high pressure, the position of the second permeation spacer 15 relative to the first permeation spacer 14 is shifted in some cases. FIG. 8B illustrates a state in which the second permeation spacer 15 is shifted, in the second direction Y, relative to the first permeation spacer 14 during operation of the separation membrane element 10. Specifically, FIG. 8B illustrates a state in which the position of the second permeation spacer 15 relative to the first permeation spacer 14 has moved in the second direction Y by the larger pitch out of the pitch L2 of the grooves a and the pitch R2 of the grooves b (in the example shown in FIG. 8B, the pitch R2 of the grooves b). As can be seen from FIG. 8B, in the case where the condition (a) is satisfied, it is possible to maintain the contact between the top portion of at least one of the projections c and the top portion of at least one of the projections d even when the position of the second permeation spacer 15 relative to the first permeation spacer 14 is shifted in the second direction Y. For example, in FIG. 8B, the top portion of the projection c1 is in contact with the top portion of the projection d1, the top portion of the projection c2 is in contact with the top portion of the projection d2, the top portion of the projection c3 is in contact with the top portion of the projection d3, and a top portion of a projection c5 is in contact with a top portion of a projection d4. As just described above, even when the position of the second permeation spacer 15 relative to the first permeation spacer 14 is shifted in the second direction Y, the contacts between the top portions of the projections c and the top portions of the projections d are maintained, and thereby it is possible to maintain sufficient dimensions of the grooves a and b that each function as a flow passage for the permeated fluid and to suppress an increase in the pressure loss of the permeated fluid.

In FIG. 8B, the top portion of the projection c4 is out of contact with the top portion of the projection d. However, in FIG. 8B, the top portion of the projection c3 next to the projection c4 is in contact with the top portion of the projection d3, and furthermore the top portion of the projection c5 is in contact with the top portion of the projection d4. As just described above, the top portions of the projections c3 and c5 located respectively on both sides of the projection c4 are in contact with the top portions of the projections d3 and d4 respectively, and thereby it is possible to suppress the entry of the projection c4 into the groove b4 facing the projection c4.

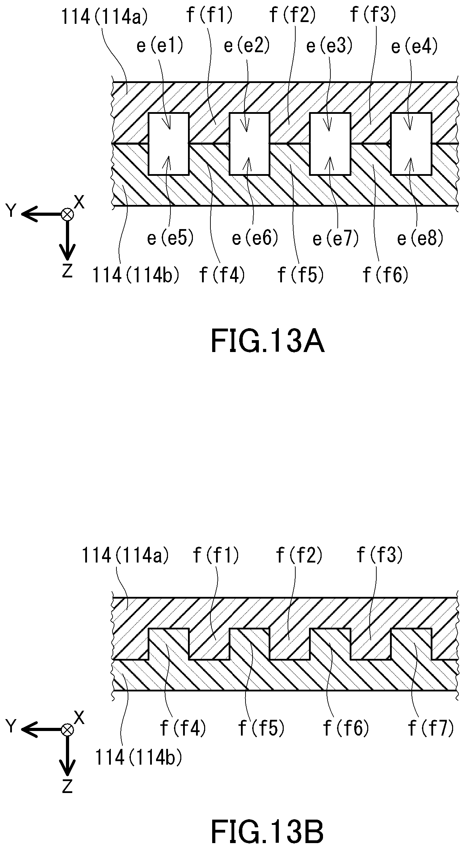

FIGs. 13A and 13B each illustrate an example in the case where the condition (a) is not satisfied. Specifically, FIGs. 13A and 13B each illustrate a state of two permeation spacers 114 of a spiral membrane element during operation of the spiral membrane element, the permeation spacers 114 being identical to each other. Each of the two permeation spacers 114 has a plurality of grooves e and a plurality of projections f. The grooves e are arranged at equal intervals in the second direction Y A width that the grooves e each have is the same in dimension as a pitch of the grooves e.

In FIG. 13A, a permeation spacer 114a, which is one of the two permeation spacers, has a plurality of grooves e1 to e4 and a plurality of projections f1 to f3, and a permeation spacer 114b, which is the other one, has a plurality of grooves e5 to e8 and a plurality of projections f4 to f6. As shown in FIG. 13A, in the state in which top portions of the projections f of the two permeation spacers 114 are in contact with each other, the grooves e of the permeation spacers 114 have sufficient dimensions. However, in the aspect of the two permeation spacers 114 shown in FIG. 13A, the projections f of the permeation spacer 114a enter the grooves e of the permeation spacer 114b while a position of the permeation spacer 114b relative to the permeation spacer 114a moves in the second direction Y by the pitch of the grooves e (FIG. 13B). Thereby, a space of each of the grooves e that functions as a flow passage for the permeated fluid is reduced significantly or eliminated, and the pressure loss of the permeated fluid is increased significantly.

In the case where the above-mentioned condition (b) is satisfied, one of the permeation spacers with a lower compressive elasticity modulus tends to be compressed preferentially during operation of the separation membrane element 10, and thus compression of the other permeation spacer with a higher compressive elasticity modulus tends to be suppressed. Thereby, it tends to be possible to maintain sufficient dimensions of the grooves in the permeation spacer with a higher compressive elasticity modulus, and to suppress an increase in the pressure loss of the permeated fluid compared to the case where the condition (b) is not satisfied.

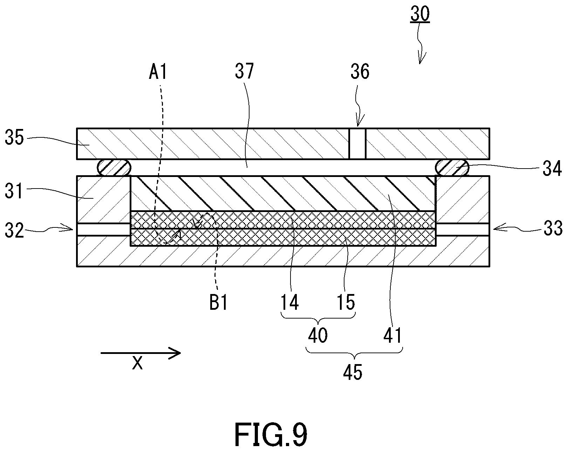

The fact that the combination of the first permeation spacer 14 and the second permeation spacer 15 can suppress an increase in the pressure loss of the permeated fluid can be verified by, for example, a pressure loss p1 measured by the following method using a measuring device 30 shown in FIG. 9. First, a rectangular laminate 40 that is 170 mm in length and 35 mm in width is produced by laminating the first permeation spacer 14 on the second permeation spacer 15 in such a manner that the surface A1 faces the surface B1. The laminate 40 may have the shape of a rounded rectangle. In the laminate 40, the grooves a of the first permeation spacer 14 and the grooves b of the second permeation spacer 15 extend in a longitudinal direction of the laminate 40. That is, the longitudinal direction of the laminate 40 coincides with the first direction X. Next, a specimen 45 is produced by further laminating a polyethylene terephthalate (PET) film 41 on the laminate 40. Here, the film 41 is, for example, brought into contact with the permeation spacer with a larger number of grooves in the second direction Y out of the first permeation spacer 14 and the second permeation spacer 15. The film 41 and the laminate 40 may be fixed with a tape or the like. The film 41 is PET100SG2 available from PANAC Co., Ltd., for example.

Next, the specimen 45 is placed in the measuring device 30. The measuring device 30 includes a holder 31, a lid member 35, and a sealing member 34, for example. The specimen 45 is placed in the holder 31 of the measuring device 30 in such a manner that the laminate 40 of the specimen 45 is positioned to be lower than the film 41. Openings 32 and 33 are formed in a wall surface of the holder 31. Each of the openings 32 and 33 communicates with the laminate 40 of the specimen 45. The openings 32 and 33 are positioned in such a manner that when a nitrogen gas is introduced from the opening 32, which is one of the openings, to an inside of the holder 31, the nitrogen gas moves in the longitudinal direction (the first direction X) of the laminate 40 and is discharged from the opening 33, which is the other opening. The openings 32 and 33 may or may not face each other.

The lid member 35 is fastened to the holder 31 at an upper part of the holder 31 using a fastener (not shown). In the lid member 35, an opening 36 for delivering a pressurizing medium, such as water, to a space 37 adjacent to the film 41 of the specimen 45 is formed. The holder 31 and the lid member 35 are preferably composed of stainless steel (SUS) from the viewpoint of pressure resistance.

The sealing member 34 is positioned between the holder 31 and the lid member 35 and prevents gas flow between an inside and an outside of the measuring device 30 at a portion except the openings 32, 33, and 36. The sealing member 34 is, for example, a sealing ring (an O-ring) that is composed of an elastic material and has a circular cross section. FIG. 9 illustrates a state in which the sealing member 34 that is a sealing ring is squeezed.

Next, the measuring device 30 is immersed in a water bath set at a temperature of 20°C. Here, the measuring device 30 is configured so as not to allow the water in the water bath to enter the measuring device 30 from the openings 32, 33, and 36. Next, a pressurizing medium, typically water, is delivered to the space 37 adjacent to the film 41 of the specimen 45 through the opening 36 of the lid member 35. Thereby, the space 37 is pressurized to 10 MPa. Furthermore, a nitrogen gas is delivered to the laminate 40 at a flow rate of 2 L/min in a 20°C environment through the opening 32 of the holder 31. The nitrogen gas to be delivered into the measuring device 30 has a temperature of 20°C. The nitrogen gas delivered through the opening 32 moves in the laminate 40 in the longitudinal direction of the laminate 40 and is discharged from the opening 33. A difference (a pressure difference D1) between the pressure of the nitrogen gas delivered to the opening 32 and the pressure of the nitrogen gas discharged from the opening 33 is measured. Next, a pressure difference D0 is measured by the same method as the method for measuring the pressure difference D1, except that the laminate 40 is absent. Based on the pressure differences D0 and D1, a pressure loss caused by the laminate 40 is calculated. The calculated value can be considered as the pressure loss p1 caused by that the nitrogen gas moves in the laminate 40 in the longitudinal direction of the laminate 40.

In the present embodiment, the pressure loss p1 measured by the above-mentioned method is, for example, 0.060 MPa or less, and may be 0.050 MPa or less, 0.040 MPa or less, less than 0.035 MPa, 0.033 MPa or less, or even 0.030 MPa or less. The lower limit of the pressure loss p1 is, for example, but not particularly limited to, 0.010 MPa, and may be 0.020 MPa or 0.026 MPa.

In the present embodiment, a pressure loss p2 measured by the same method as the above-mentioned method for measuring the pressure loss p1 except that the space 37 is pressurized to 1 MPa is preferably small as well. The pressure loss p2 is, for example, 0.020 MPa or less, and preferably 0.015 MPa or less. The lower limit of the pressure loss p2 is, for example, but not particularly limited to, 0.005 MPa, and may be 0.008 MPa.

A ratio of the pressure loss p1 (MPa) with respect to the pressure loss p2 (MPa) (a rate of change in the pressure loss) is, for example, but not particularly limited to, 500% or less, preferably 400% or less, and more preferably 350% or less, and may be 300% or less or 250% or less. The lower limit of the rate of change in the pressure loss is, for example, but not particularly limited to, 150%.

An increment I of the pressure loss calculated by formula (1) below is, for example, 0.004 MPa or less, preferably 0.003 MPa or less, more preferably 0.0025 MPa or less, still more preferably 0.0022 MPa or less, and particularly preferably 0.002 MPa or less. The lower limit of the increment I is, for example, but not particularly limited to, 0.0005 MPa. The increment I is an estimated value of an increment of the pressure loss according to the method for measuring the pressure loss p2 in the case where the space 37 is further pressurized by an additional 1 MPa.

$$\text{Increment I (MPa)} = (\text{pressure loss p1 (MPa)} - \text{pressure loss p2 (MPa)})/9 \quad (1)$$

Furthermore, in the present embodiment, a pressure loss p3 measured by the same method as the above-mentioned method for measuring the pressure loss p1 except that the measuring device 30 is immersed in a water bath set at a temperature of 50°C and the temperature of the nitrogen gas to be delivered into the measuring device 30 is changed to 50°C is preferably small as well. The pressure loss p3 is, for example, 0.070 MPa or less, and may be 0.060 MPa or less, 0.050 MPa or less, or even 0.040 MPa or less. The lower limit of the pressure loss p3 is, for example, but not particularly limited to, 0.010 MPa, and may be 0.020 MPa or 0.030 MPa.

In the present embodiment, a pressure loss p4 measured by the same method as the above-mentioned method for measuring the pressure loss p1 except that the space 37 is pressurized to 1 MPa, the measuring device 30 is immersed in a water bath set at a temperature of 50°C, and the temperature of the nitrogen gas to be delivered into the measuring device 30 is changed to 50°C is preferably small as well. The pressure loss p4 is, for example, 0.020 MPa or less, and preferably 0.015 MPa or less. The lower limit of the pressure loss p2 is, for example, but not particularly limited to, 0.005 MPa and may be 0.008 MPa.

An increment II of the pressure loss calculated by formula (2) below is, for example, 0.0045 MPa or less, preferably 0.004 MPa or less, and more preferably 0.0035 MPa or less. The lower limit of the increment II is, for example, but not particularly limited to, 0.0005 MPa. The increment II is an estimated value of an increment of the pressure loss according to the method for measuring the pressure loss p4 in the case where the space 37 is further pressurized by an additional 1 MPa. Increment II (MPa) = (pressure loss p3 (MPa) - pressure loss p4 (MPa))/9 (2)

[Use of spiral membrane element]

As the use of the separation membrane element 10 of the present embodiment, there can be mentioned the use for separating an acid gas from a gas mixture containing the acid gas. Examples of the acid gas in the gas mixture include carbon dioxide, hydrogen sulfide, carbonyl sulfide, sulfur oxide (SOx), hydrogen cyanide, and nitrogen oxide (NOx), and preferred is carbon dioxide. The gas mixture contains an additional gas other than the acid gas. Examples of the additional gas include a nonpolar gas such as hydrogen or nitrogen, and an inert gas such as helium, and preferred is nitrogen. Particularly, the separation membrane element 10 of the present embodiment is suitably used for separating carbon dioxide from a gas mixture containing carbon dioxide and nitrogen. However, the use of the separation membrane element 10 is not limited to the use for separating an acid gas from the above-mentioned gas mixture.

EXAMPLES

Hereinafter, the present invention will be described in more detail by way of Examples and Comparative Examples, but the present invention is not limited to these examples.

(Example 1)

The pressure losses p1 and p2 were determined by the above-mentioned methods using #3000E available from KB SEIREN LTD. as the first permeation spacer and a 46-wale material available from Guilford as the second permeation spacer, and the rate of change in the pressure loss calculated from the pressure losses p1 and p2 and the increment I of the pressure loss calculated by the formula (1) were determined. Table 1 shows the results. Note that no defect was found on the PET film when the specimen was observed after the measurement of the pressure loss p1.

(Example 2)

The pressure losses p1, p2, p3, and p4 were determined by the above-mentioned methods using #3000E available from KB SEIREN LTD. as the first permeation spacer and a 34-wale material available from HORNWOOD INC. as the second permeation spacer, and the rate of change in the pressure loss calculated from the pressure losses p1 and p2, the increment I of the pressure loss calculated by the formula (1), and the increment II of the pressure loss calculated by the formula (2) were determined. Table 1 shows the results. Note that no defect was found on the PET film when the specimen was observed after the measurement of the pressure loss p1.

(Example 3)

The pressure losses p1, p2, p3, and p4 were determined by the above-mentioned methods using the 46-wale material available from Guilford as the first permeation spacer and the 34-wale material available from HORNWOOD INC. as the second permeation spacer, and the rate of change in the pressure loss calculated from the pressure losses p1 and p2, the increment I of the pressure loss calculated by the formula (1), and the increment II of the pressure loss calculated by the formula (2) were determined. Table 1 shows the results. Note that no defect was found on the PET film when the specimen was observed after the measurement of the pressure loss p1.

(Comparative Example 1)

The pressure losses p1, p2, p3, and p4 were determined by the above-mentioned methods using the 46-wale material available from Guilford as the first permeation spacer and omitting the second permeation spacer, and the rate of change in the pressure loss calculated from the pressure losses p1 and p2, the increment I of the pressure loss calculated by the formula (1), and the increment II of the pressure loss calculated by the formula (2) were determined. For measuring the pressure losses, a specimen was produced by bringing the first permeation spacer into contact with the PET film in such a manner that the surface having the grooves in the first permeation spacer was brought into contact with the film. Table 1 shows the results. Note that when the specimen was observed after the measurement of the pressure loss p1, a lot of depression and projection marks presumably caused by the grooves of the first permeation spacer were formed on the PET film, causing a defect.

(Comparative Example 2)

The pressure losses p1, p2, p3, and p4 were determined by the above-mentioned methods using #3000E available from KB SEIREN LTD. as the first permeation spacer and omitting the second permeation spacer, and the rate of change in the pressure loss calculated from the pressure losses p1 and p2, the increment I of the pressure loss calculated by the formula (1), and the increment II of the pressure loss calculated by the formula (2) were determined. For measuring the pressure losses, a specimen was produced by bringing the first permeation spacer into contact with the PET film in such a manner that the surface having the grooves in the first permeation spacer was brought into contact with the film. Table 1 shows the results. Note that when the specimen was observed after the measurement of the pressure loss p1, a lot of depression and projection marks presumably caused by the grooves of the first permeation spacer were formed on the PET film, causing a defect.

(Example 4)

The pressure losses p1 and p2 were determined by the above-mentioned methods using the 34-wale material available from HORNWOOD INC. for each of the first permeation spacer and the second permeation spacer, and the rate of change in the pressure loss calculated from the pressure losses p1 and p2 and the increment I of the pressure loss calculated by the formula (1) were determined. Table 1 shows the results. Note that no defect was found on the PET film when the specimen was observed after the measurement of the pressure loss p1.

(Example 5)

The pressure losses p1, p2, p3, and p4 were determined by the above-mentioned methods using #3000E available from KB SEIREN LTD. for each of the first permeation spacer and the second permeation spacer, and the rate of change in the pressure loss calculated from the pressure losses p1 and p2, the increment I of the pressure loss calculated by the formula (1), and the increment II of the pressure loss calculated by the formula (2) were determined. Table 1 shows the results. Note that no defect was found on the PET film when the specimen was observed after the measurement of the pressure loss p1.

[Table 1]

| | First permeation spacer | Second permeation spacer | Pressure loss p2 (1 MPa, 20°C) [MPa] | Pressure loss p1 (10 MPa, 20°C) [MPa] | Rate of change in pressure loss [%] (*1) | Increment I of pressure loss [MPa] | Damage of film (*2) | Pressure loss p4 (1 MPa, 50°C) [MPa] | Pressure loss p3 (10 MPa, 50°C) [MPa] | Increment II of pressure loss [MPa] |
|---|---|---|---|---|---|---|---|---|---|---|
| Example 1 | #3000E | 46-wale material | 0.0145 | 0.033 | 227.6 | 0.002056 | ○ | - | - | - |
| Example 2 | #3000E | 34-wale material | 0.010 | 0.029 | 2900 | 0.002111 | ○ | 0.013 | 0.045 | 0.003630 |
| Example 3 | 46-wale material | 34-wale material | 0.0085 | 0.026 | 305.9 | 0.001944 | ○ | 0.010 | 0.038 | 0.003111 |
| Comparative Example 1 | 46-wale material | - | 0.033 | 0.078 | 236.4 | 0.005000 | × | 0.042 | 0.096 | 0.006000 |
| Comparative Example 2 | #3000E | - | 0.045 | 0.100 | 222.2 | 0.006111 | × | 0.048 | 0.094 | 0.005111 |
| Example 4 | 34-wale material | 34-wale material | 0.0075 | 0.035 | 466.7 | 0.003056 | ○ | - | - | - |
| Example 5 | #3000E | #3000E | 0.02 | 0.048 | 240.0 | 0.003111 | ○ | 0.019 | 0.058 | 0.004370 |

(*1) The value calculated by "the pressure loss p1 ÷ the pressure loss p2 × 100."
(*2) o: No defect was found on the film after the measurement of the pressure loss p1.
×: A defect was found on the film after the measurement of the pressure loss p1.

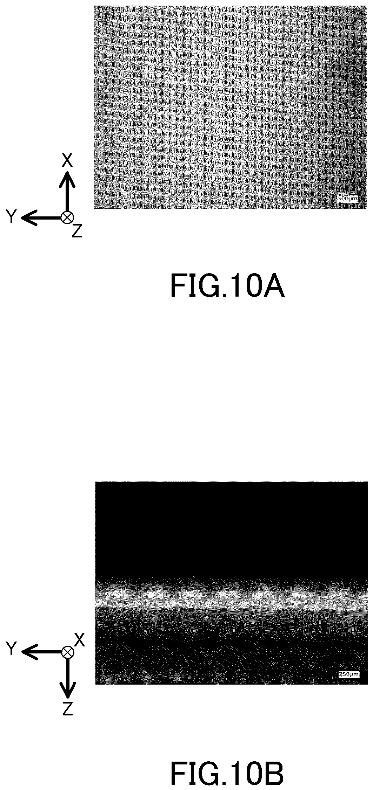

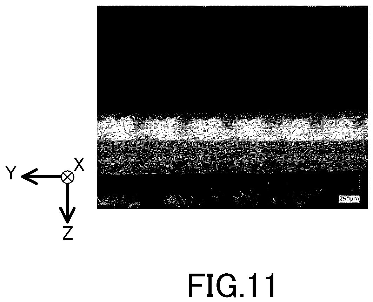

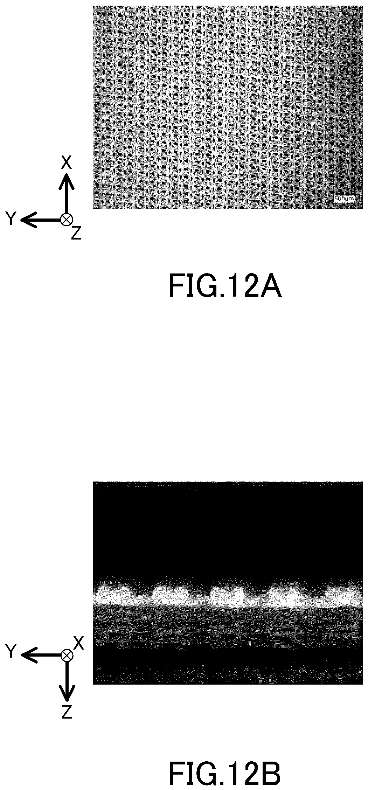

The details of the permeation spacers used in Examples, etc. are as shown in Table 2. These permeation spacers were each a single tricot knit. In Table 2, the pitch of the grooves and the width that the grooves each have were obtained through observations of cross sections of the permeation spacers with a microscope and calculations by the above-mentioned methods. In addition, the compressive elasticity modulus of each of the permeation spacers was measured by the above-mentioned method. FIGs. 10A and 10B show respectively microscope images of a surface and a cross section of #3000E. FIG. 11 shows a microscope image of a cross section of the 46-wale material. FIGs. 12A and 12B show respectively microscope images of a surface and a cross section of the 34-wale material. As can be seen from FIGs. 10A to 12B, the grooves extended in the first direction X and were arranged at substantially equal intervals in the second direction Y perpendicular to the first direction X in these permeation spacers.

[Table 2]

| Product number | Manufacturing company | The number of grooves (*1) | Pitch of grooves [μm] | Width that grooves each have [μm] | Ratio (*2) | Material | Thickness [μm] | Arithmetic mean roughness Ra [μm] (*4) | Compressive elasticity modulus [MPa] |
|---|---|---|---|---|---|---|---|---|---|
| #3000E | KB SEIREN LTD. | 60 | 350 | 70 | 0.17 | PET | 250 | 46.2 | $2.29 \times 10^{-5}$ |
| 46-wale material | Guilford | 46 | 390 | 110 | 0.22 | Epoxy resin-impregnated PET (*3) | 250 | 22.2 | $3.93 \times 10^{-5}$ |
| 34-wale material | HORNWOOD INC. | 34.5 | 460 | 280 | 0.38 | Epoxy resin-impregnated PET (*3) | 250 | 54.1 | $3.48 \times 10^{-5}$ |

(*1) The number of the grooves per 25.4 mm in the second direction Y.
(*2) The ratio of the width (μm) that the grooves each have with respect to the total value of the width (μm) that the grooves each have and the pitch (μm) of the grooves.
(*3) A material obtained by impregnating a single tricot knit composed of PET with an epoxy resin.
(*4) The arithmetic mean roughness Ra of the surface having no grooves.

From the relationship between the pitch of the grooves and the width that the grooves each have in each of the permeation spacers shown in Table 2, it is found that the first permeation spacer and the second permeation spacer satisfy at least the above-mentioned condition (a) in Examples 1 to 5. Particularly, the above-mentioned condition (c) is also satisfied in Examples 1 to 3. As understood from Table 1, the pressure losses p1 and p3 were each a smaller value in Examples in which at least the condition (a) was satisfied than in Comparative Examples. From this, it is inferred that in the case where a spiral membrane element is produced adopting the combination of the permeation spacers in each of Examples, the spiral membrane element can suppress an increase in the pressure loss of the permeated fluid during operation of the spiral membrane element, especially when the feed fluid is supplied at a high pressure.

Specifically, the pressure losses p1 and p2 were each a smaller value and furthermore the increment I of the pressure loss was also a smaller value in Example 1 than in Comparative Examples 1 and 2. Moreover, unlike in Comparative Examples 1 and 2, the PET film was hardly damaged by the measurement of the pressure loss p1 in Example 1. This reveals that in an aspect in which the first permeation spacer is combined with the second permeation spacer, it is possible to suppress the pressure loss more and also possible to suppress the damage of the separation membrane during operation of the spiral membrane element more than in an aspect in which one permeation spacer alone is used.

In addition, each of the pressure losses p1 and p2, especially the pressure loss p1, was a smaller value and furthermore the increment I of the pressure loss was also a smaller value in Example 1 than in Example 5. This reveals that in an aspect in which the first permeation spacer and the second permeation spacer further satisfy the above-mentioned condition (c), the pressure loss, especially the pressure loss when the feed fluid is supplied at a high pressure, can be more suppressed than in an aspect in which the first permeation spacer and the second permeation spacer do not satisfy the condition (c).

In Example 2, the pressure losses p1 to p4 were each a smaller value and furthermore the increment I of the pressure loss and the increment II of the pressure loss were each a smaller value as well than in Comparative Example 2. Moreover, unlike in Comparative Example 2, the PET film was hardly damaged by the measurement of the pressure loss p1 in Example 2. This reveals that in an aspect in which the first permeation spacer is combined with the second permeation spacer, it is possible to suppress the pressure loss more and also possible to suppress the damage of the separation membrane during operation of the spiral membrane element more than in an aspect in which one permeation spacer alone is used.

In addition, the pressure loss p1 was a smaller value and furthermore the increment I of the pressure loss was also a smaller value in Example 2 than in Examples 4 and 5. This reveals that in an aspect in which the first permeation spacer and the second permeation spacer further satisfy the above-mentioned condition (c), the pressure loss, especially the pressure loss when the feed fluid is supplied at a high pressure, can be more suppressed than in an aspect in which the first permeation spacer and the second permeation spacer do not satisfy the condition (c).

In Example 3, the pressure losses p1 to p4 were each a smaller value and furthermore the increment I of the pressure loss and the increment II of the pressure loss were each a smaller value as well than in Comparative Example 1. Moreover, unlike in Comparative Example 1, the PET film was hardly damaged by the measurement of the pressure loss p1 in Example 3. This reveals that in an aspect in which the first permeation spacer is combined with the second permeation spacer, it is possible to suppress the pressure loss more and also possible to suppress the damage of the separation membrane during operation of the spiral membrane element more than in an aspect in which one permeation spacer alone is used.

In addition, the pressure loss p1 was a smaller value and furthermore the increment I of the pressure loss was also a smaller value in Example 3 than in Example 4. This reveals that in an aspect in which the first permeation spacer and the second permeation spacer further satisfy the above-mentioned condition (c), the pressure loss, especially the pressure loss when the feed fluid is supplied at a high pressure, can be more suppressed than in an aspect in which the first permeation spacer and the second permeation spacer do not satisfy the condition (c).

In Examples 4 and 5, the first permeation spacer and the second permeation spacer satisfy the above-mentioned condition (a) while not satisfying the conditions (b) and (c). In Examples 4 and 5, the pressure losses p1 and p2 were each a smaller value and furthermore the increment I of the pressure loss was also a smaller value than in Comparative Examples 1 and 2. Moreover, unlike in Comparative Example 1, the PET film was hardly damaged by the measurement of the pressure loss p1 in Examples 4 and 5. This reveals that in an aspect in which the first permeation spacer is combined with the second permeation spacer, it is possible to suppress the pressure loss more and also possible to suppress the damage of the separation membrane during operation of the spiral membrane element more than in an aspect in which one permeation spacer alone is used.

Note that the PET film was damaged by the measurement of the pressure loss p1 in Comparative Examples 1 and 2. It is inferred that the damage of the film was caused by the entry of the film into the grooves of the permeation spacer during the measurement of the pressure loss p1. It is inferred that in the case where spiral membrane elements are produced using the permeation spacers of Comparative Examples 1 and 2, the separation membrane in each of the spiral membrane elements will be damaged during operation of the spiral membrane elements. When the separation membrane is damaged and a crack occurs in, for example, the separation functional layer, the separation performance of the separation membrane is anticipated to be lowered.

Conventionally, it has been considered that in a spiral membrane element including a permeation spacer having grooves that each have a relatively large width, the pressure loss of the permeated fluid increases significantly during operation of the spiral membrane element, especially when the feed fluid is supplied at a high pressure, and therefore such a permeation spacer cannot be used for spiral membrane elements. However, in the present embodiment, a permeation spacer having grooves that each have a relatively large width can also be used for spiral membrane elements by satisfying at least the condition (a), as can be understood from the results of Examples.

INDUSTRIAL APPLICABILITY

The spiral membrane element of the present embodiment is suitable for separating an acid gas from a gas mixture containing the acid gas. In particular, the spiral membrane element of the present embodiment is suitable for separating carbon dioxide from an off-gas of a chemical plant or a thermal power plant.

**Claims**

1. A spiral membrane element comprising:

   a central tube; and
   a membrane leaf that has a separation membrane and is wound around the central tube, wherein
   the membrane leaf has
   a first permeation spacer having a surface A1 and a second permeation spacer having a surface B1 facing the surface A1,
   the surface A1 has a plurality of grooves a and a plurality of projections c,
   the surface B1 has a plurality of grooves b and a plurality of projections d,
   on the surface A1, the grooves a and the projections c each extend in a first direction and are arranged in a second direction perpendicular to the first direction,
   on the surface B1, the grooves b and the projections d each extend in the first direction and are arranged in the second direction, and
   at least one condition selected from the group consisting of condition (a) and condition (b) below is satisfied:

   (a) While a position of the second permeation spacer relative to the first permeation spacer moves in the second direction by a larger pitch out of a pitch of the grooves a and a pitch of the grooves b, a top portion of at least one of the projections c is in contact with a top portion of at least one of the projections d;
   (b) A compressive elasticity modulus of the first permeation spacer is different from a compressive elasticity modulus of the second permeation spacer.

2. The spiral membrane element according to claim 1, wherein a shape of the surface A1 is different from a shape of the surface B1.

3. The spiral membrane element according to claim 1, wherein at least one condition selected from the group consisting of condition (i), condition (ii), and condition (iii) is satisfied:

   (i) The number of the grooves a per 25.4 mm in the second direction is different from the number of the grooves b per 25.4 mm in the second direction;
   (ii) The pitch of the grooves a in the second direction is different from the pitch of the grooves b in the second direction;
   (iii) The grooves a each have a width that is different from a width that the grooves b each have.

4. The spiral membrane element according to claim 1, wherein a ratio of the number of the grooves b per 25.4 mm in the second direction with respect to the number of the grooves a per 25.4 mm in the second direction is 0.3 to 2.5.

5. The spiral membrane element according to claim 1, wherein a ratio of the pitch ($\mu$m) of the grooves b in the second direction with respect to the pitch ($\mu$m) of the grooves a in the second direction is 0.3 to 2.5.

6. The spiral membrane element according to claim 1, wherein a ratio of a width ($\mu$m) that the grooves b each have with respect to a width ($\mu$m) that the grooves a each have is 0.2 to 5.0.

7. The spiral membrane element according to claim 1, wherein a ratio of a width (μm) that the grooves a each have with respect to a total value of the width (μm) that the grooves a each have and the pitch (μm) of the grooves a in the second direction is 0.15 to 0.55.

8. The spiral membrane element according to claim 1, wherein

    the first permeation spacer has a surface A2 facing the surface A1,
    the second permeation spacer has a surface B2 facing the surface B1, and
    each of the surface A2 and the surface B2 is flat.

9. The spiral membrane element according to claim 1, wherein

    the first permeation spacer has a surface A2 facing the surface A1,
    the second permeation spacer has a surface B2 facing the surface B1, and
    each of the surface A2 and the surface B2 has no grooves.

10. The spiral membrane element according to claim 1, wherein a pressure loss measured by a test below is less than 0.035 MPa.
    Test: A rectangular laminate that is 170 mm in length and 35 mm in width is produced by laminating the first permeation spacer on the second permeation spacer in such a manner that the surface A1 faces the surface B1. A specimen is produced by further laminating a polyethylene terephthalate film on the laminate. A nitrogen gas is delivered to the laminate at a flow rate of 2 L/min in a 20°C environment while a space adjacent to the film of the specimen is pressurized to 10 MPa. A pressure loss caused by that the nitrogen gas moves in the laminate in a longitudinal direction of the laminate is measured.

11. The spiral membrane element according to claim 1, wherein

    the membrane leaf has two pieces of the separation membranes, and
    the two pieces of the separation membranes are stacked with each other and sealed in such a manner as to have a bag-like structure.

12. The spiral membrane element according to claim 11, wherein the first permeation spacer and the second permeation spacer are disposed between the two pieces of the separation membranes.

13. The spiral membrane element according to claim 1, wherein the spiral membrane element is used for separating carbon dioxide from a gas mixture containing carbon dioxide and nitrogen.

Feed fluid

Feed fluid

10

22

21h

13

Non-permeated fluid

Permeated fluid

21

14

15

12

11

FIG.1

FIG.2

14

a (a1)　a (a2)　a (a3)　a (a4)　a (a5)

A1

Y ← ⊙ Z
↓
X

c (c1)　c (c2)　c (c3)　c (c4)

## FIG.3A

14

L1 L2

A2

L3

Y ← ⊗ X
↓
Z

A1

a (a1)　a (a2)　a (a3)　a (a4)　a (a5)

c (c1)　c (c2)　c (c3)　c (c4)

## FIG.3B

15

b (b1)  b (b2)  b (b3)  b (b4)

B1

X
Y ⊗ Z

d (d1)  d (d2)  d (d3)

# FIG.4A

15

b (b1)  b (b2)  b (b3)  b (b4)
B1  d (d1)  d (d2)  d (d3)

R3

Y ⊗ X
Z

R1  R2

B2

# FIG.4B

12

1

2

# FIG.5

26a

U

14

15

12

13

# FIG.6

FIG.7

FIG.8A

FIG.8B

FIG.9

FIG.10A

FIG.10B

FIG.11

X
Y ⊗ Z

FIG.12A

Y ⊗ X
Z

FIG.12B

114(114a)  f(f1)  f(f2)  f(f3)

e(e1)  e(e2)  e(e3)  e(e4)

Y ← ⊗ X

Z

e(e5)  e(e6)  e(e7)  e(e8)

114(114b)  f(f4)  f(f5)  f(f6)

**FIG.13A**

114(114a)  f(f1)  f(f2)  f(f3)

Y ← ⊗ X

Z

f(f4)  f(f5)  f(f6)  f(f7)

114(114b)

**FIG.13B**

<table>
<tr><td colspan="2" align="center">**INTERNATIONAL SEARCH REPORT**</td><td>International application No.<br><br>**PCT/JP2023/000686**</td></tr>
</table>

**A.    CLASSIFICATION OF SUBJECT MATTER**

**_B01D 63/10_**(2006.01)i; **_B01D 53/22_**(2006.01)i; **_B01D 63/00_**(2006.01)i
FI:    B01D63/10; B01D63/00 510; B01D53/22

According to International Patent Classification (IPC) or to both national classification and IPC

**B.    FIELDS SEARCHED**

Minimum documentation searched (classification system followed by classification symbols)

B01D53/22;61/00-71/82;C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2000-51671 A (NITTO DENKO CORP) 22 February 2000 (2000-02-22)<br>    paragraphs [0022]-[0031], fig. 1-2 | 1-12 |
| Y | | 1-13 |
| Y | JP 4-215824 A (SHELL INTERNATL RES MAATSCHAPPIJ BV) 06 August 1992<br>(1992-08-06)<br>    claim 1, paragraphs [0010]-[0013] | 1-13 |
| Y | JP 2001-62261 A (NITTO DENKO CORP) 13 March 2001 (2001-03-13)<br>    paragraphs [0043]-[0050], fig. 2, 4, 6 | 1-13 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **09 March 2023** | **28 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/000686**

| Patent document cited in search report | | | Publication date (day/month/year) | Patent family member(s) | Publication date (day/month/year) |
|---|---|---|---|---|---|
| JP | 2000-51671 | A | 22 February 2000 | (Family: none) | |
| JP | 4-215824 | A | 06 August 1992 | EP 443642 A2 claim 1, p. 4, line 1 to p. 5, line 10 | |
| JP | 2001-62261 | A | 13 March 2001 | (Family: none) | |

Form PCT/ISA/210 (patent family annex) (January 2015)

**REFERENCES CITED IN THE DESCRIPTION**

**Patent documents cited in the description**

- JP 2015024372 A